# FASCICULE DE BREVET EUROPEEN

(11) **EP 3 299 605 B1**
(45) Date de publication et mention de la délivrance du brevet: **04.09.2019**
(21) Numéro de dépôt: 17189544.4
(22) Date de dépôt: 06.09.2017
(51) Int. Cl.: F02C 9/18, F01D 9/06

(54) **CARTER AVEC BRAS ASPIRANT POUR TURBOMACHINE AXIALE**
GEHÄUSE MIT ABSAUGSTÜTZE FÜR AXIALE TURBOMASCHINE
HOUSING WITH SUCTION STRUT FOR AN AXIAL TURBOMACHINE

(30) Priorité: 27.09.2016 BE 201657200
(43) Date de publication de la demande: 28.03.2018
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- EP-A1- 2 305 960
- FR-A1- 2 589 197
- GB-A- 2 407 142
- US-A- 6 004 095
- US-A1- 2015 330 249

## Description

### Domaine technique

L'invention concerne un carter support de turbomachine axiale. Plus précisément, l'invention traite d'un carter formant une structure supportant un rotor de la turbomachine. L'invention a également trait à une turbomachine axiale, notamment un turboréacteur d'avion ou un turbopropulseur d'aéronef.

### Technique antérieure

Le maintien des arbres de transmission d'un turboréacteur est assuré par son châssis structurel. Ce châssis permet de transmettre l'effort de poussée à l'aéronef associé. Il forme un lien structurel entre les différentes unités de compression et de détente des flux annulaires du turboréacteur. En outre, il permet d'articuler les arbres basse pression et haute pression au stator du turboréacteur, en plus de maintenir la soufflante.

Le châssis structurel comprend notamment un carter support avec une jante externe et un moyeu intérieur. Ces portions sont reliées par une rangée circulaire de bras de carter qui permettent une communication d'efforts. Dans le domaine des turboréacteurs, ces bras doivent être résistants ; ce qui implique de les épaissir et d'augmenter leur nombre. Or, leur largeur doit rester discrète afin de ne pas perturber le flux annulaire les croisant. Donc deux impératifs contradictoires doivent être respectés simultanément.

Le document US 2010/0150700 A1 divulgue un turboréacteur double flux. Une de ses manches annulaires est traversée par des bras de carter formant des supports. En amont, ces bras comportent des faces d'attaque qui sont munies d'écopes de prélèvement de flux. Ces écopes sont disposées à mi-hauteur, et sont équipées d'obturateur pilotables. L'intégration de ces derniers s'effectue dans l'épaisseur de ces bras. Or, les formes de ces bras de carter perturbent l'écoulement si bien que le rendement du turboréacteur est pénalisé.

Le document GB 2 407 142 A divulgue un turboréacteur avec un carter muni d'aubes d'entrée. Ces aubes d'entrée traversent un flux annulaire de la turbomachine et présentent des orifices.

Le document US 2015/0330249 A1 décrit un carter muni de bras radiaux qui sont équipés d'un système de refroidissement comprenant notamment une rangée d'orifices s'étendant radialement ou axialement sur toute l'étendue des bras radiaux.

### Résumé de l'invention

### Problème technique

L'invention a pour objectif de résoudre au moins un des problèmes posés par l'art antérieur. Plus précisément, l'invention a pour objectif d'améliorer le rendement d'une turbomachine équipée d'un carter support avec des bras de carter. L'invention a également pour objectif de proposer une solution simple, résistante, légère, économique, fiable, facile à produire, commode d'entretien, et d'inspection aisée.

### Solution technique

L'invention a pour objet une turbomachine conformément à la revendication 1.

Selon un mode avantageux de l'invention, le premier bras comprend un bord de fuite, l'orifice étant disposé sur le bord de fuite.

Selon un mode avantageux de l'invention, le premier bras comprend un tronçon axial dont la largeur se réduit vers l'aval, au moins un ou chaque orifice étant disposé dans ledit tronçon axial.

Selon un mode avantageux de l'invention, le premier bras comprend une surface formant un rayon de raccordement avec l'une des surfaces annulaires, l'orifice étant formé dans le rayon de raccordement.

Selon un mode avantageux de l'invention, le premier bras de carter comporte deux faces latérales opposées, les orifices étant répartis entre lesdites deux faces latérales.

Selon un mode avantageux de l'invention, la rangée comprend outre un deuxième bras avec au moins un deuxième orifice disposé dans le passage annulaire au niveau d'une desdites surfaces annulaires, l'orifice du premier bras étant caché de l'orifice du deuxième bras par la surface externe du moyeu ; lesdits orifices étant éventuellement au niveau radialement de la surface annulaire interne.

Selon un mode avantageux de l'invention, la longueur axiale d'au moins un ou de chaque bras est supérieure à l'écartement radial entre la surface annulaire interne et la surface annulaire externe, éventuellement au moins deux fois supérieure.

Selon un mode avantageux de l'invention, au moins un ou chaque orifice comprend un insert de contrôle d'aspiration de fuite.

Selon un mode avantageux de l'invention, le passage comprend une épaisseur E entre la paroi annulaire et le moyeu intérieur, le ou au moins un ou chaque orifice étant disposé dans au moins une extrémité de bras selon l'épaisseur E ; chaque extrémité de bras représente au plus 10% de l'épaisseur E, ou au plus 5%.

Selon un mode avantageux de l'invention, au moins un ou chaque orifice est disposé, suivant l'épaisseur E, au niveau d'une des surfaces annulaires.

Selon un mode avantageux de l'invention, l'écartement radial peut être un écartement radial minimal ou moyen.

Selon un mode avantageux de l'invention, le ou chaque orifice est un orifice d'aspiration de couche limite, radialement au niveau d'une extrémité radiale de bras.

Selon un mode avantageux de l'invention, les orifices forment un ou plusieurs alignement(s), au moins un ou chaque alignement épousant la surface annulaire associée.

Selon un mode avantageux de l'invention, les bras de la rangée annulaire sont identiques, chacun d'eux comprenant des orifices identiques.

Selon un mode avantageux de l'invention, les bras de la rangée annulaire sont des bras de liaison du moyeu à la paroi annulaire et/ou s'étendent radialement de la paroi au moyeu.

Selon un mode avantageux de l'invention, la rangée annulaire comprend entre quatre et trente bras, ou entre six et vingt bras, ou entre huit et douze bras, les valeurs étant incluses.

Selon un mode avantageux de l'invention, le moyeu et/ou la paroi comprennent une ou plusieurs brides annulaires de fixation s'étendant radialement, notamment depuis une extrémité axiale.

Selon un mode avantageux de l'invention, les bras, le moyeu et la paroi forment un ensemble monobloc, et sont éventuellement venus de matière.

Selon un mode avantageux de l'invention, chaque orifice est disposé à moins de 10mm, ou à moins de 6mm, ou à moins de 2mm de la surface annulaire associée ; éventuellement au moins un ou chaque orifice affleure sa surface associée.

Selon un mode avantageux de l'invention, les orifices sont répartis axialement sur la moitié ou le tiers aval du bras associé.

Selon un mode avantageux de l'invention, la largeur, notamment le diamètre, d'au moins un ou de chaque orifice est inférieur(e) à 10mm, ou à 5mm, ou à 3mm, ou à 1mm, ou à 0,50mm.

Selon un mode avantageux de l'invention, le passage annulaire délimite le flux primaire de la turbomachine.

L'invention a également pour objet un carter support de rotor pour turbomachine axiale, mais qui n'est pas couvert par les revendications, le carter comprenant : une paroi annulaire externe ; un moyeu intérieur adapté pour supporter le rotor de la turbomachine axiale ; éventuellement un passage annulaire entre la paroi annulaire et le moyeu intérieur; et une rangée annulaire de bras reliant radialement la paroi annulaire au moyeu ; remarquable en ce qu'au moins une des extrémités radiale de bras de carter comprend un orifice débouchant entre la paroi annulaire et le moyeu intérieur.

L'invention a également pour objet une turbomachine, mais qui n'est pas couverte par les revendications, comprenant au moins un carter support de rotor, remarquable en ce que le carter est conforme à l'invention, préférentiellement la turbomachine comprend un rotor supporté par le carter support.

Selon un mode avantageux de l'invention, la turbomachine comprend un compresseur avec au moins une rangée annulaire d'aubes de stator, au moins une desdites aubes de stator étant dans le prolongement axial du ou de l'un des orifices.

Selon un mode avantageux de l'invention, selon la circonférence, la largeur des bras est supérieure au double ou au quadruple de la largeur des aubes de stator.

Selon un mode avantageux de l'invention, le premier bras comprend un logement, la turbomachine comprenant un élément mobile disposé dans ledit logement, au moins un orifice du premier bras étant à distance dudit élément mobile, notamment axialement à distance.

Selon un mode avantageux de l'invention, le moyeu délimite une chambre pressurisée en communication avec le ou plusieurs orifices.

Selon un mode avantageux de l'invention, la turbomachine comprend un palier monté à l'intérieur du moyeu, le rotor comprenant un arbre de transmission articulé via ledit palier.

Selon un mode avantageux de l'invention, la turbomachine comprend une soufflante supportée axialement et/ou radialement par le moyeu du carter.

Selon un mode avantageux de l'invention, la turbomachine comprend un bec de séparation fixé circulairement à la paroi annulaire externe.

Selon un mode avantageux de l'invention, le compresseur comprend une virole externe qui supporte les aubes statoriques, ladite virole externe étant fixée circulairement à la paroi annulaire externe.

Selon un mode avantageux de l'invention, les aubes statoriques sont au moins deux fois plus courtes axialement que le ou chaque bras de carter, éventuellement au moins quatre fois plus courtes.

De manière générale, les modes avantageux de chaque objet de l'invention sont également applicables aux autres objets de l'invention.

### Avantages apportés

L'invention permet de limiter l'amplification des tourbillons au niveau des couches limites. L'écoulement dans les couches limites devient moins turbulent. Dès lors le rendement est préservé car l'impact de ces tourbillons est moindre sur l'étage de compresseur disposé en aval. Cette solution permet de préserver la résistance mécanique des bras tout comme du moyeu ou de la paroi. Leurs embouchures affleurant le passage évite d'y générer des perturbations.

### Brève description des dessins

La figure 1 représente une turbomachine axiale selon l'invention.
La figure 2 esquisse un carter support de rotor selon l'invention.
La figure 3 illustre une coupe d'une série d'orifices dans un bras de carter selon l'invention.
La figure 4 montre une vue en plan d'un insert pour orifice selon l'invention.

### Description des modes de réalisation

Dans la description qui va suivre, les termes interne et externe renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal des flux dans la turbomachine.

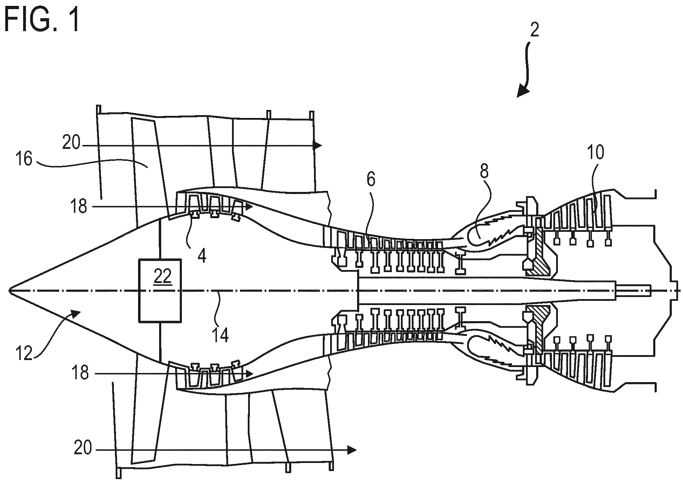

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et un flux secondaire 20 traversant un conduit annulaire (partiellement représenté) le long de la machine pour ensuite rejoindre le flux primaire en sortie de turbine. Des moyens de démultiplication 22, tel un réducteur épicycloïdal, peuvent réduire la vitesse de rotation de la soufflante 16 et/ou du compresseur basse pression 4 par rapport à la turbine associée. Le flux secondaire 20 peut être accéléré de sorte à générer une réaction de poussée nécessaire au vol d'un aéronef.

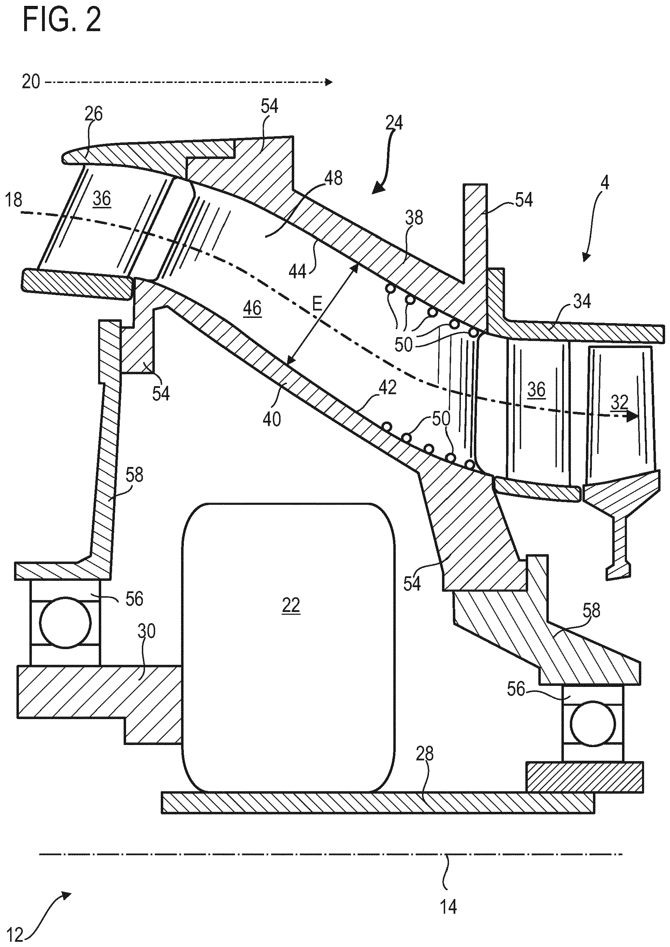

La figure 2 est une vue en coupe d'un carter support 24 de rotor 12 de turbomachine, la turbomachine pouvant être similaire à celle de la figure 1.

On peut y observer une partie du compresseur basse-pression 4, les moyens de démultiplication 22, un bec de séparation 26 du flux primaire 18 et du flux secondaire 20. Le rotor 12 regroupe la soufflante et un ou plusieurs arbres de transmission (28 ; 30). Ces arbres de transmission (28 ; 30) peuvent être couplés aux moyens de démultiplication 22 pour actionner la soufflante et les rangées d'aubes rotoriques 32 du compresseur 4. Ces aubes rotoriques 32 peuvent être placées à l'intérieur de la virole externe 34 qui supporte des rangées annulaires d'aubes statoriques 36 du compresseur 4. Le bec de séparation 26 peut également comporter une rangée annulaire d'aubes statoriques 36. Eventuellement, une ou plusieurs rangées d'aubes statoriques sont à calage variable, c'est-à-dire à orientation variable par rapport à l'axe de rotation 14.

Le carter support 24 forme la structure, le châssis de la turbomachine. Il est adapté pour en supporter l'effort de poussée de la soufflante, en plus de pouvoir porter le poids propre de la turbomachine. Il peut être désigné par l'acronyme FHF, pour l'expression anglo-saxonne « Fan Hub Frame ». Il peut être un carter intermédiaire.

Il comporte une paroi annulaire extérieure 38, et un moyeu intérieur 40. La paroi 38 comme le moyeu 40 sont circulaires et coaxiaux. Le moyeu 40 est entouré par la paroi 38 qui l'enveloppe. Ils présentent respectivement une surface annulaire externe 42 et une surface annulaire interne 44 qui sont radialement en regard l'une de l'autre. Ces surfaces annulaires (42 ; 44) sont écartées radialement de sorte à ménager entre elles un passage annulaire 46 traversé par le flux primaire 18. La paroi 38 peut comprendre des moyens d'ancrage à la structure d'aéronef.

Afin de relier physiquement la paroi extérieure 38 au moyeu intérieur 40, le carter support 24 présente au moins un préférentiellement plusieurs bras 48, par exemple huit bras 48. Chaque bras 48 présente une largeur, mesurée selon la circonférence du moyeu 40, qui peut être supérieure ou égale à quatre ou à six fois l'épaisseur d'une aube statorique 36. Ces bras 48 sont disposés en une rangée annulaire, et s'étendent chacun radialement d'une surface annulaire (42 ; 44) à l'autre. En fonctionnement, ils traversent le flux primaire 18. Ils peuvent s'étendre axialement sur la majorité ou sur sensiblement toute la longueur de la paroi 38 et/ou du moyeu 40. Ils peuvent être creux pour recevoir des équipements de la turbomachine, par exemple une broche de transmission de mouvement.

Afin de contrôler l'impact de leur présence sur le flux primaire 18, au moins un ou plusieurs ou chaque bras 48 comporte un orifice 50, ou plusieurs orifices 50. Chaque orifice 50 communique avec le passage annulaire 46, notamment en débouchant dedans. Ce ou ces orifices 50 sont configurés pour permettre une aspiration d'une partie du flux primaire 18, notamment au niveau des surfaces annulaires (42 ; 44). Ils peuvent être distants de moins de 1,00 mm de la paroi 38 ou du moyeu 40. Leurs positions radiales peuvent être partiellement ou totalement dans les rayons de raccordement aux extrémités des bras 48. Ces prédispositions facilitent l'aspiration de tourbillons se formant dans les couches limites.

Les orifices 50 peuvent être partagés sur les faces latérales des bras 48. Ils peuvent suivre une répartition le long de leur bras 48. Optionnellement, ils peuvent être réunis dans un tronçon axial de leur bras 48, par exemple un tronçon aval. A titre d'exemple, ils peuvent être regroupés dans le quart aval du bras 48. Chaque bras 48 peut être défini par un empilement radial de profils aérodynamiques. Ces profils peuvent être parallèles aux surfaces annulaires (42 ; 44). Le tronçon aval renfermant les orifices 50 peut correspondre à une zone où des profils aérodynamiques s'amincissent vers l'aval. Ainsi, une aube 36 en regard d'un bras 48 peut être dans le prolongement axialement d'un ou de plusieurs orifices 50, si bien que les tourbillons qu'elle rencontre en pied et en tête sont amoindris.

Le passage 46 présente une épaisseur E mesurée perpendiculairement aux surfaces annulaires (42 ; 44). L'épaisseur E peut être une épaisseur moyenne, par exemple entre deux bras successifs. L'épaisseur E peut varier axialement en raison des variations de diamètres, elle peut comprendre une composante radiale et une composante axiale. Les orifices 50 peuvent être placés dans les extrémités de cette épaisseur E ; par exemple dans les derniers 20%, ou 10%, ou 5% de l'épaisseur E. Ces extrémités peuvent être mesurées suivant l'épaisseur E du passage 46. Autrement dit, les orifices peuvent être disposés dans les 20% ou 10% ou 5% des profils aérodynamique formant une extrémité de bras 48.

Le carter support 24 peut comporter des brides annulaires 54 s'étendant radialement. Ces brides annulaires 54 peuvent former les extrémités axiales de la paroi 38 et/ou du moyeu 40. Elles permettent notamment la fixation du bec de séparation 26, et la fixation de la virole externe 34. Par ailleurs, ces brides 54 permettent de supporter des paliers 56, par exemple des roulements, articulant les arbres (28 ; 30). Cette fonction de support peut être indirecte, par exemple via des liaisons annulaires 58 rapportées.

Les orifices 50 peuvent comprendre des moyens de perte de charge, tel(le) une section calibrée ou un insert.

La présente figure présente un carter support avec un compresseur basse pression en aval. Or, l'invention peut également s'appliquer à un carter en aval du compresseur basse pression. Un compresseur haute pression peut remplacer le compresseur basse pression.

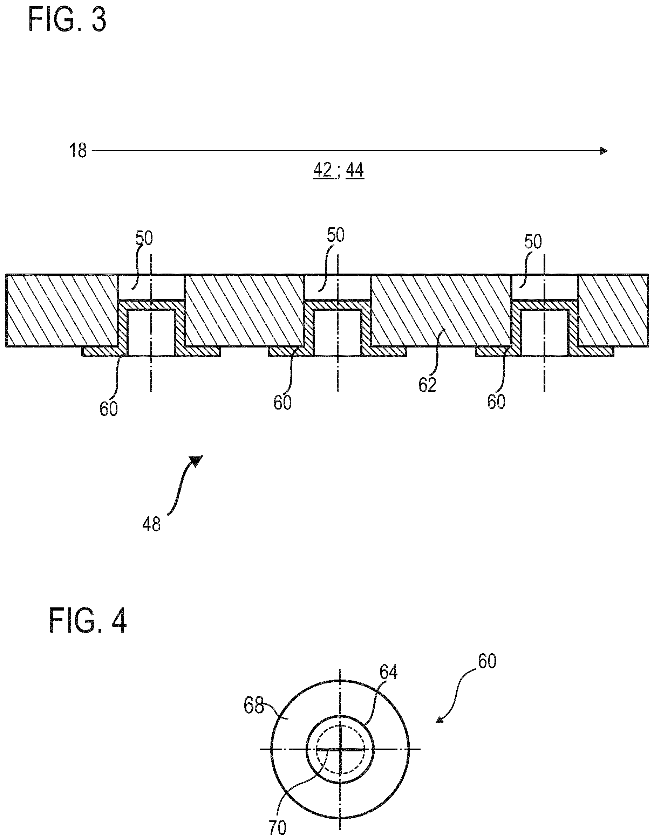

La figure 3 esquisse une succession d'inserts 60 disposés dans des orifices 50 d'un bras 48. Le flux primaire 18 est représenté, tout comme l'une des surfaces annulaires (42 ; 44) apparaissant en arrière-plan.

Les orifices 50 peuvent être alignés le long d'une ligne de flux. Ils peuvent être agencés selon une courbe qui épouse la courbure de leur surface annulaire (42 ; 44) voisine. Leur écartement axial peut être variable.

Les inserts 60 sont introduits dans les orifices 50 qui traversent la cloison 62 matérialisant l'enveloppe du bras 48. Les inserts 60 forment généralement des chapeaux. L'écoulement recueilli par les orifices 50 peut être utilisé pour préssuriser une chambre de la turbomachine, notamment une chambre avec une enceinte de lubrication dont les joints d'étanchéité requierent une différence de pression pour réduire le relarguage d'huile.

La figure 4 représente une vue en plan d'un insert 60 équipant l'un des orifices de bras de carter. L'insert 60 peut être représentatif de ceux présentés en relation avec la figure 3.

L'insert 60 peut correspondre à celui qui est décrit dans la demande de brevet EP 2 305 960 A1, déposée le 04-11-2009 par l'entreprise TECHSPACE AERO SA. L'insert 60 peut notamment comprendre un corps tubulaire 64 placé dans l'épaisseur de la cloison du bras, et une rondelle annulaire 68 ; également appelée collerette ; plaquée contre la cloison du bras. A l'opposé de la rondelle 68, le corps 64 peut comprendre plusieurs entailles 70 délimitant des lamelles mobiles. Ces lamelles permettent de contrôler une perte de charge, et/ou de s'ouvrir en réponse à une différence de pression donnée.

## Revendications

1. Turbomachine (2) comprenant un rotor (12) et un carter support (24) supportant le rotor (12), le carter (24) comprenant :
- une paroi annulaire externe (38) avec une surface annulaire interne (44) ;
- un moyeu intérieur (40) adapté pour supporter le rotor (12) de la turbomachine axiale et comprenant une surface annulaire externe (42) ;
- un passage annulaire (46) entre la paroi annulaire (38) et le moyeu intérieur (40) ;
- une rangée annulaire de bras (48) traversant radialement le passage annulaire (46) ;
**caractérisée en ce que**
la rangée annulaire comprend un premier bras (48) avec une pluralité d'orifices (50) disposés dans le passage annulaire (46) radialement au niveau de la surface annulaire externe (42) et axialement uniquement dans le tiers aval du bras (48) et une pluralité d'orifices (50) disposés dans le passage annulaire (46) radialement au niveau de la surface annulaire interne (44) et axialement uniquement dans le tiers aval du bras (48).

2. Turbomachine (2) selon la revendication 1, **caractérisée en ce que** le premier bras (48) comprend un tronçon axial dont la largeur se réduit vers l'aval, au moins un ou chaque orifice (50) étant disposé dans ledit tronçon axial.

3. Turbomachine (2) selon l'une des revendications 1 à 2, **caractérisée en ce que** le premier bras (48) comprend une surface formant un rayon de raccordement avec l'une des surfaces annulaires (42 ; 44), les orifices (50) étant formés dans le rayon de raccordement.

4. Turbomachine (2) selon l'une des revendications 1 à 3, **caractérisée en ce que** le premier bras (48) de carter (24) comporte deux faces latérales opposées selon la circonférence, les orifices (50) étant répartis entre lesdites deux faces latérales.

5. Turbomachine (2) selon l'une des revendications 1 à 4, **caractérisée en ce que** la rangée comprend en outre un deuxième bras (48) avec au moins un deuxième orifice (50) disposé dans le passage annulaire (46) au niveau d'une desdites surfaces annulaires (42 ; 44), l'orifice (50) du premier bras (48) étant caché de l'orifice (50) du deuxième bras (48) par le moyeu (40).

6. Turbomachine (2) selon l'une des revendications 1 à 5, **caractérisée en ce qu'**au moins un ou chaque orifice (50) comprend un insert (60) de contrôle d'aspiration de fuite.

7. Turbomachine (2) selon l'une des revendications 1 à 6, **caractérisé en ce que** le passage (46) comprend une épaisseur E entre la paroi annulaire (38) et le moyeu intérieur (40), suivant l'épaisseur E chaque orifice (50) est disposé dans les extrémités de bras (48); chaque extrémité de bras (48) représentant au plus 10% de l'épaisseur E, ou au plus 5%.

8. Turbomachine (2) selon l'une des revendications 1 à 7, **caractérisée en ce qu'**elle comprend un compresseur (4 ; 6) avec au moins une rangée annulaire d'aubes de stator (36), au moins une desdites aubes de stator étant (36) dans le prolongement axial du ou de l'un des orifices (50).

9. Turbomachine (2) selon l'une des revendications 1 à 8, **caractérisée en ce que** le premier bras (48) comprend un logement, la turbomachine comprenant un élément mobile disposé dans ledit logement, au moins un orifice (50) du premier bras (48) étant à distance dudit élément mobile, notamment axialement à distance.

10. Turbomachine (2) selon l'une des revendications 1 à 9, **caractérisée en ce que** le moyeu (40) délimite une chambre pressurisée en communication avec le ou plusieurs orifices (50).

11. Turbomachine (2) selon l'une des revendications 1 à 10, **caractérisée en ce qu'**elle comprend un palier (56) monté à l'intérieur du moyeu (40), le rotor (12) comprenant un arbre de transmission (28 ; 30) articulé via ledit palier (56).

12. Turbomachine (2) selon l'une des revendications 1 à 11, **caractérisée en ce qu'**elle comprend une soufflante (16) supportée axialement et/ou radialement par le moyeu (40) du carter (24).

## Patentansprüche

1. Turbomaschine (2) umfassend einen Rotor (12) und ein Unterstützungsgehäuse (24), das den Rotor (12) unterstützt, wobei das Gehäuse (24) umfasst:
- eine äußere ringförmige Wand (38) mit einer inneren ringförmigen Oberfläche (44);
- eine innere Nabe (40), die dazu angepasst ist, den Rotor (12) der axialen Turbomaschine zu tragen, und eine äußere ringförmige Oberfläche (42) umfasst;
- einen ringförmigen Durchgang (46) zwischen der ringförmigen Wand (38) und der inneren Nabe (40);
- eine ringförmige Reihe von Stützen (48), die radial durch den ringförmigen Durchgang (46) durchgehen;
**gekennzeichnet dadurch, dass**
die ringförmige Reihe eine erste Stütze (48) mit einer Mehrzahl von Öffnungen (50) umfasst, die in dem ringförmigen Durchgang (46) radial hinsichtlich der äußeren ringförmigen Oberfläche (42) und axial einzig in dem stromabwärtigen Drittel der Stütze (48) vorgesehen sind, und eine Mehrzahl von Öffnungen (50) umfasst, die in dem ringförmigen Durchgang (46) radial hinsichtlich der inneren ringförmigen Oberfläche (44) und axial einzig in dem stromabwärtigen Drittel der Stütze (48) vorgesehen sind.

2. Die Turbomaschine (2) gemäß Anspruch 1, **gekennzeichnet dadurch, dass** die erste Stütze (48) einen axialen Abschnitt umfasst, dessen Breite sich stromwärts verringert, wobei zumindest eine oder jede Öffnung (50) in dem besagten axialen Abschnitt angeordnet ist.

3. Die Turbomaschine (2) gemäß Anspruch 1 oder 2, **gekennzeichnet dadurch, dass** die erste Stütze (48) eine Oberfläche umfasst, die einen verbindenden Radius mit einer der ringförmigen Oberflächen (42; 44) ausbildet, wobei die Öffnungen (50) in dem verbindenden Radius gebildet sind.

4. Die Turbomaschine (2) gemäß einem der Ansprüche 1 bis 3, **gekennzeichnet dadurch, dass** die erste Stütze (48) des Gehäuses (24) zwei laterale Seiten umfasst, die sich umlaufend gegenüberliegen, wobei die Öffnungen (50) zwischen den besagten beiden lateralen Seiten verteilt sind.

5. Die Turbomaschine (2) gemäß einem der Ansprüche 1 bis 4, **gekennzeichnet dadurch, dass** die Reihe weiter eine zweite Stütze (48) mit zumindest einer zweiten Öffnung (50) umfasst, die in dem ringförmigen Durchgang (46) in Bezug auf eine der besagten ringförmigen Oberflächen (42; 44) angeordnet ist, wobei die Öffnung (50) der ersten Stütze (48) von der Öffnung (50) der zweiten Stütze durch die Nabe (40) verdeckt ist.

6. Die Turbomaschine (2) gemäß einem der Ansprüche 1 bis 5, **gekennzeichnet dadurch, dass** zumindest eine oder jede Öffnung (50) einen Einsatz (60) zum Steuern des austretenden Soges umfasst.

7. Die Turbomaschine (2) gemäß einem der Ansprüche 1 bis 6, **gekennzeichnet dadurch, dass** der Durchgang (46) eine Dicke E zwischen der ringförmigen Wand (38) und der inneren Nabe (40) hat, wobei entlang der Dicke E jede Öffnung (50) in den Enden der Stütze (48) angeordnet ist; und wobei jedes Ende der Stütze (48) höchstens 10% der Dicke E oder höchstens 5% repräsentiert.

8. Die Turbomaschine (2) gemäß einem der Ansprüche 1 bis 7, **gekennzeichnet dadurch, dass** sie einen Kompressor (4; 6) mit zumindest einer ringförmigen Reihe von Statorblättern (36) aufweist, wobei zumindest eines der besagten Statorblätter (36) in der axialen Verlängerung von einer oder mehreren der Öffnungen (50) ist.

9. Die Turbomaschine (2) gemäß einem der Ansprüche 1 bis 8, **gekennzeichnet dadurch, dass** die erste Stütze (48) eine Einhausung umfasst, und dass die Turbomaschine ein bewegliches Element umfasst, das in der besagten Einhausung angeordnet ist, wobei zumindest eine Öffnung (50) der ersten Stütze (48) von dem besagten beweglichen Element beabstandet ist, insbesondere axial beabstandet.

10. Die Turbomaschine (2) gemäß einem der Ansprüche 1 bis 9, **gekennzeichnet dadurch, dass** die Nabe (40) eine unter Druck stehende Kammer begrenzt, die mit der oder mehreren Öffnungen (50) in Verbindung ist.

11. Die Turbomaschine (2) gemäß einem der Ansprüche 1 bis 10, **gekennzeichnet dadurch, dass** sie ein Lager (56) umfasst, das innerhalb der Nabe (40) angebracht ist, wobei der Rotor (12) eine Antriebswelle (28; 30) umfasst, die über das besagte Lager (56) verbunden ist.

12. Die Turbomaschine (2) gemäß einem der Ansprüche 1 bis 11, **gekennzeichnet dadurch, dass** sie einen Lüfter (16) umfasst, der durch die Nabe (40) des Gehäuses (24) axial und/oder radial getragen ist.

## Claims

1. Turbomachine (2) comprising a rotor (12) and a support casing (24) for the rotor (12), the casing (24) comprising:
- an outer annular wall (38) with an inner annular surface (44);
- an inner hub (40) able to support the rotor (12) of the axial turbomachine and comprising an outer annular surface (42);
- an annular passage (46) between the annular wall (38) and the inner hub (40);
- an annular row of struts (48) passing radially through the annular passage (46);
**characterized in that**
the annular row comprises a first strut (48) with a plurality of orifices (50) arranged in the annular passage (46) radially aligned with the outer annular surfaces (42) and axially within the downstream third of the strut (48) and a plurality of orifices (50) arranged in the annular passage (46) radially aligned with the inner annular surfaces (44) and axially within the downstream third of the strut (48).

2. Turbomachine (2) according to claim 1, **characterized in that** the first strut (48) comprises an axial portion, the width of which reduces in the downstream direction, at least one or each orifice (50) being arranged in said axial portion.

3. Turbomachine (2) according to claim 1 or 2, **characterized in that** the first strut (48) comprises a surface forming a connecting radius with one of the annular surfaces (42; 44), the orifice (50) being formed in the connecting radius.

4. Turbomachine (2) according to any of claims 1 to 3, **characterized in that** the first strut (48) of the casing (24) comprises two circumferentially opposed side faces, the orifices (50) being distributed between said two side faces.

5. Turbomachine (2) according to any of claims 1 to 4, **characterized in that** the row also comprises a second strut (48) with at least one second orifice (50) arranged in the annular passage (46) aligned with one of said annular surfaces (42; 44), the orifice (50) of the first strut (48) being concealed from the orifice (50) of the second strut (48) by the hub (40).

6. Turbomachine (2) according to any of claims 1 to 5, **characterized in that** at least one or each orifice (50) comprises an insert (60) for controlling the trailing suction.

7. Turbomachine (2) according to any of claims 1 to 6, **characterized in that** the passage (46) comprises a thickness E between the annular wall (38) and the inner hub (40); along the thickness E, each orifice (50) is arranged in the ends of the strut (48); each end of the strut (48) representing at most 10% of the thickness E, or at most 5%.

8. Turbomachine (2) according to any of claims 1 to 7, **characterized in that** it comprises a compressor (4; 6) with at least one annular row of stator vanes (36), at least one of said stator vanes being (36) in the axial extension of the or one of the orifices (50).

9. Turbomachine (2) according to any of claims 1 to 8, **characterized in that** the first strut (48) comprises a housing, the turbomachine comprising a movable element arranged in said housing, at least one orifice (50) of the first strut (48) being remote from said movable element, in particular axially remote.

10. Turbomachine (2) according to any of claims 1 to 9, **characterized in that** the hub (40) delimits a pressurised chamber in communication with the or several orifices (50).

11. Turbomachine (2) according to any of claims 1 to 10, **characterized in that** it comprises a bearing (56) mounted inside the hub (40), the rotor (12) comprising a transmission shaft (28; 30) mounted in articulated fashion via said bearing (56).

12. Turbomachine (2) according to any of claims 1 to 11, **characterized in that** it comprises a fan (16) axially supported and/or radially supported by the hub (40) of the casing (24).
